**Europäisches Patentamt**

**European Patent Office**

**Office européen des brevets**

(19)

(11) Veröffentlichungsnummer: **0 207 061**
A2

# EUROPÄISCHE PATENTANMELDUNG

(12)

(21) Anmeldenummer: 86890163.8

(22) Anmeldetag: 04.06.86

(51) Int. Cl.⁴: **B 60 C 9/00,** B 60 C 9/20, B 60 C 9/08

(30) Priorität: 10.06.85 AT 1730/85

(71) Anmelder: **Kubica, Wladyslaw, Hauergasse 12/1, A-2410 Hainburg (AT)**
Anmelder: **Kubica, Adam, ul. Ofiar Oswiencimia 8/4, Warschau (PL)**

(43) Veröffentlichungstag der Anmeldung: **30.12.86 Patentblatt 86/52**

(72) Erfinder: **Kubica, Wladyslaw, Hauergasse 12/1, A-2410 Hainburg (AT)**
Erfinder: **Kubica, Adam, ul. Ofiar Oswiencimia 8/4, Warschau (PL)**

(84) Benannte Vertragsstaaten: **AT BE CH DE FR GB IT LI LU NL SE**

(74) Vertreter: **Rippel, Andreas, Dipl.-Ing., Maxingstrasse 34, A-1130 Wien (AT)**

(54) **Fahrzeugreifen.**

(57) Der Gurt und/oder die Radialarmierung eines Fahrzeugreifens besteht wenigstens teilweise aus Elementen aus mehrschichtig gewickeltem flachen Draht. Dadurch wird eine wesentliche Vereinfachung und Verbilligung der Fertigung einer Armierung erreicht. Für den Gurt können diese Elemente aus Ringen 5 und 6 bestehen, die aus einem einzigen flachen Draht spiralförmig gewickelt sind. Der Draht beginnt im Inneren des Ringes 6, verläuft an seinem äusseren Umfang zum Ring 5 und endet mit dem Ende 9 im Inneren des Ringes 5. Im Bereich des Überganges vom Ring 6 zum Ring 5 sind Halteklammern 10 angeordnet.

EP 0 207 061 A2

0207061

- 1 -

Fahrzeugreifen

Die Erfindung bezieht sich auf einen Fahrzeugreifen mit einem Gurt und/oder einer Radialarmierung.

Die Armierung bekannter Reifen besteht aus Gewebe, Faser- oder Stahlkord bzw. Stahlseilen, wobei bei allen Armierungsarten nachteilig ist, daß deren Fertigung komplizierte Arbeitsoperationen erfordert, was wieder aufwendige Maschinen bedingt. Ein weiterer Nachteil ist, daß die in üblicherweise armierten Reifen im Gebrauch zufolge der auftretenden Reibung zwischen den Fasern im Gewebe oder im verzwirnten Kord bzw. zwischen den Drähten im Stahlkord oder Stahlseilen verhältnismäßig viel Wärme entwickeln, was den Einsatzbereich der Reifen begrenzt.

Die Erfindung hat es sich zum Ziel gesetzt, einen Fahrzeugreifen der eingangs genannten Art zu schaffen, der die geschilderten Nachteile nicht aufweist, der demnach einfacher und daher billiger zu fertigen ist und dessen Einsatzbereich überdies größer als bei herkömmlichen Reifen ist. Erreicht wird dieses Ziel dadurch, daß die Armierung mindestens teilweise aus Elementen aus mehrschichtig gewickeltem flachen Draht gebildet ist. Die erfindungsgemäße Verwendung von Elementen aus flachem Draht für die Armierung von Fahrzeugreifen bewirkt eine wesentliche Vereinfachung und Verbilligung der Fertigung. Die Elemente aus mehrschichtig gewickeltem flachen Draht können einbaufertig vorgefertigt werden. Durch die Verwendung von flachem Draht ist es überdies möglich, jede nur denkbare Festigkeit zu erreichen, was insbesondere für Reifentypen für schwere Fahrzeuge wichtig ist.

Um ein Auseinandergehen der Elemente während des Einbaues zu verhindern ist es zweckmäßig, wenn die Enden des gewickelten flachen Drahtes eines Elementes durch Halteklammern am Element gehalten sind.

Der Gurt eines erfindungsgemäßen Fahrzeugreifens kann aus mehreren nebeneinander liegenden spiralförmig gewickelten Ringen bestehen. Diese Ringe können bei der Vorfertigung miteinander durch Abstandhalter verbunden werden, sodaß der gesamte Gurt vorgefertigt werden kann.

Es ist aber auch möglich, daß der Gurt aus mehreren nebeneinander liegenden Elementen besteht, deren jedes zwei nebeneinander verlaufende, aus einem einzigen Draht spiralförmig gewickelte Ringe aufweist, wobei der Draht im Inneren des einen Ringes beginnt, am äußeren Umfang von einem Ring zum anderen verläuft und im Inneren des anderen Ringes endet. Auch solche Elemente können nebeneinanderliegend miteinander verbunden werden, sodaß auch hier eine Vorfertigung des gesamten Gurtes möglich ist.

Eine erfindungsgemäße Radialarmierung besteht aus Ringen ähnlich den für den Gurt beschriebenen. Diese Ringe sind zu langgezogenen Elementen mit Schleifen an beiden Enden ausgebildet und fächerartig aufgefaltet, wobei zur Verankerung in den Reifenwülsten in den Schleifen Bolzen od. dgl. angeordnet sind. Die Verankerung erfolgt an beidseitig in den Reifenwülsten angeordneten Verankerungsringen, welche im Bereich der Schleifen mit kammartigen Vorsprüngen oder abnehmbaren Verankerungselementen versehen sind.

Eine äußerst wirkungsvolle Radialarmierung wird erreicht, wenn, nach einem weiteren Merkmal der Erfindung, die Radialarmierung aus zwei untereinander quer zum Reifenquerschnitt versetzten Gruppen von einzelnen Elementen besteht. Um die Reifenwandstärke nicht zu vergrößern ist es dabei vorteilhaft, wenn die Seitenwände des Reifens entlang des Umfanges den einzelnen Gruppen entsprechend wellenartig geformt sind.

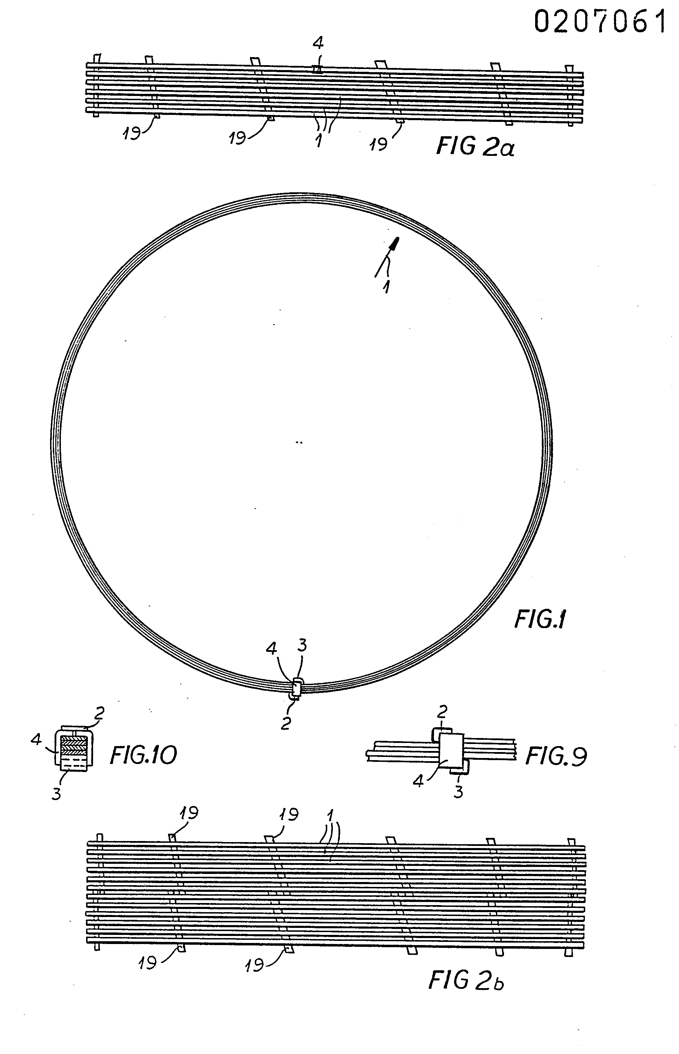

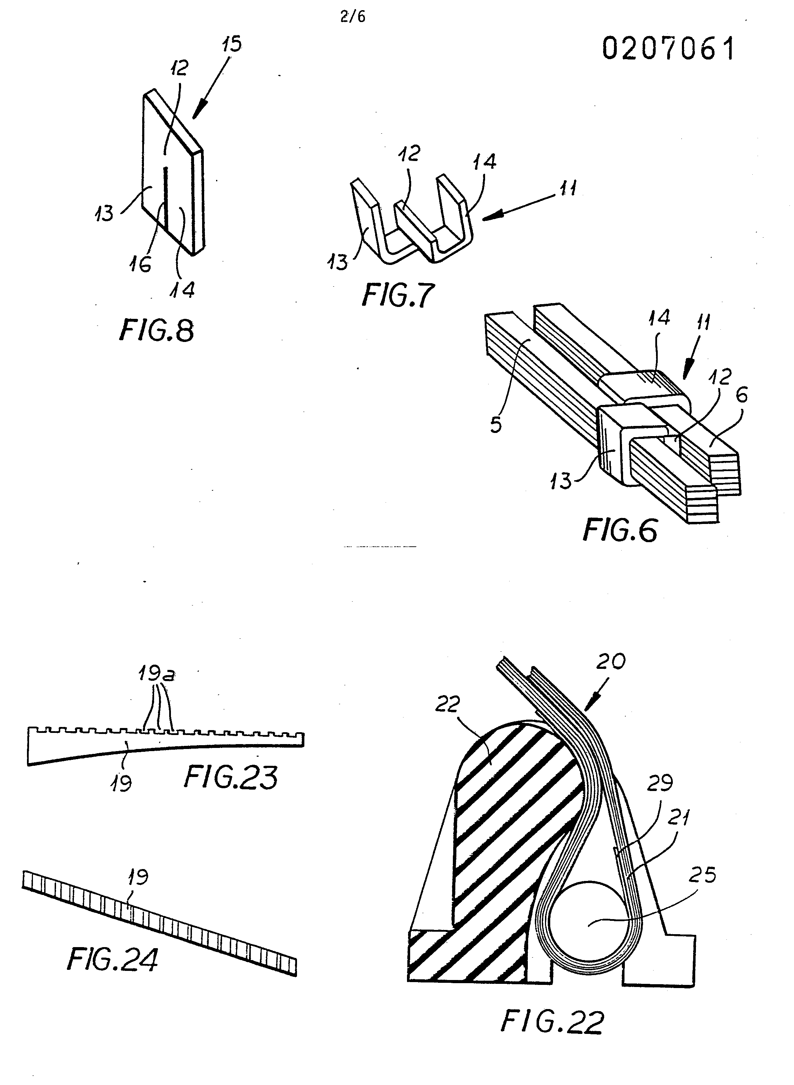

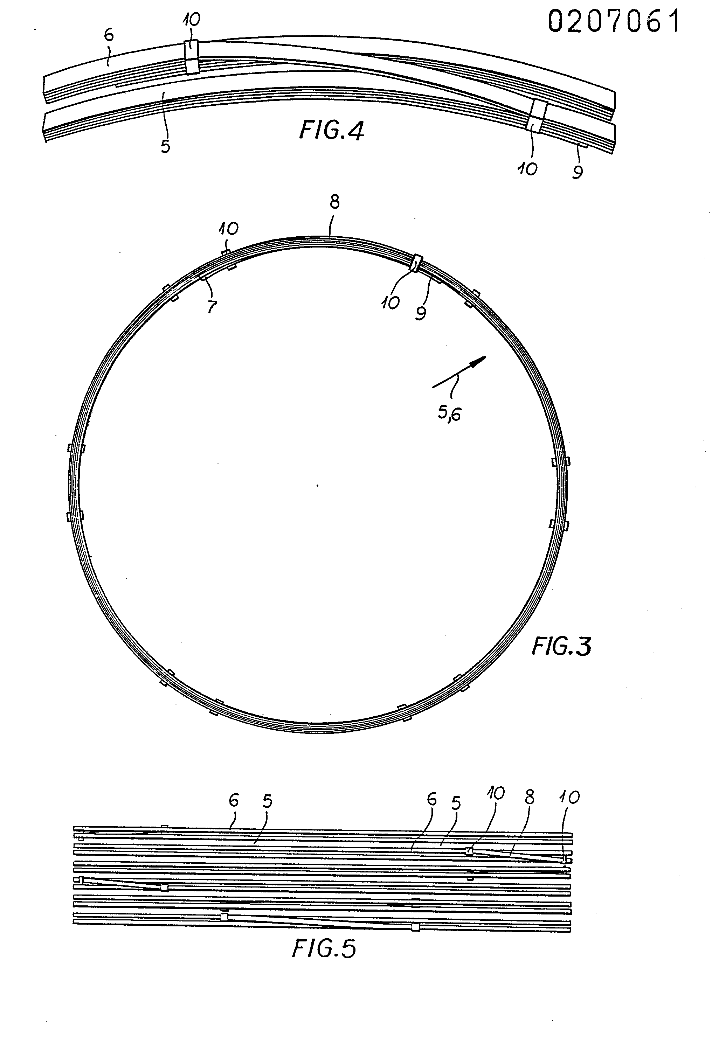

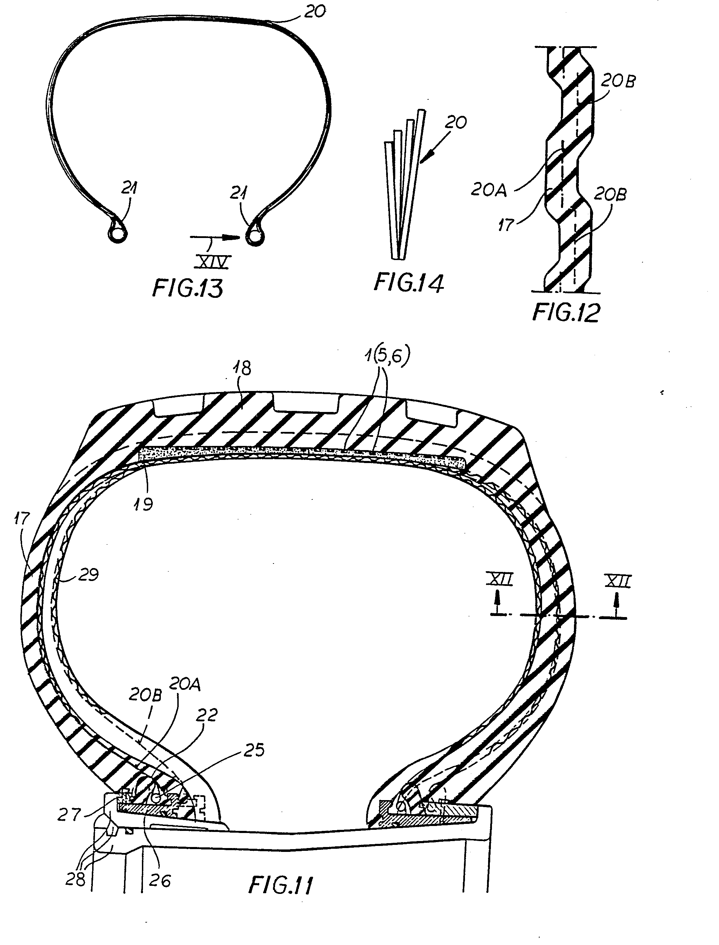

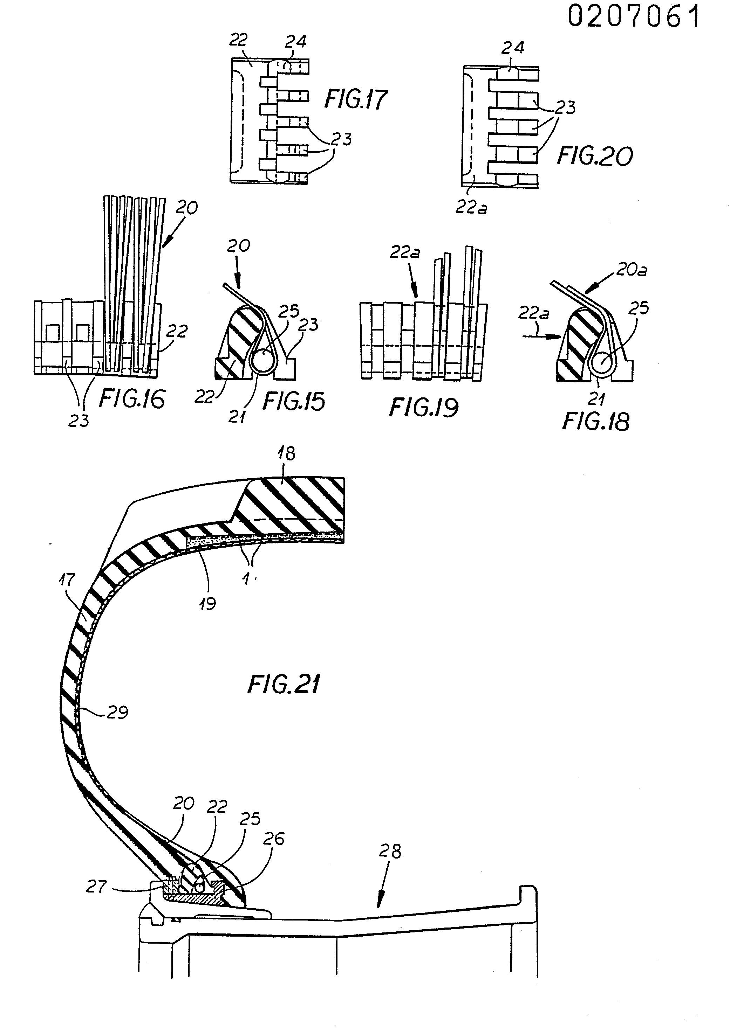

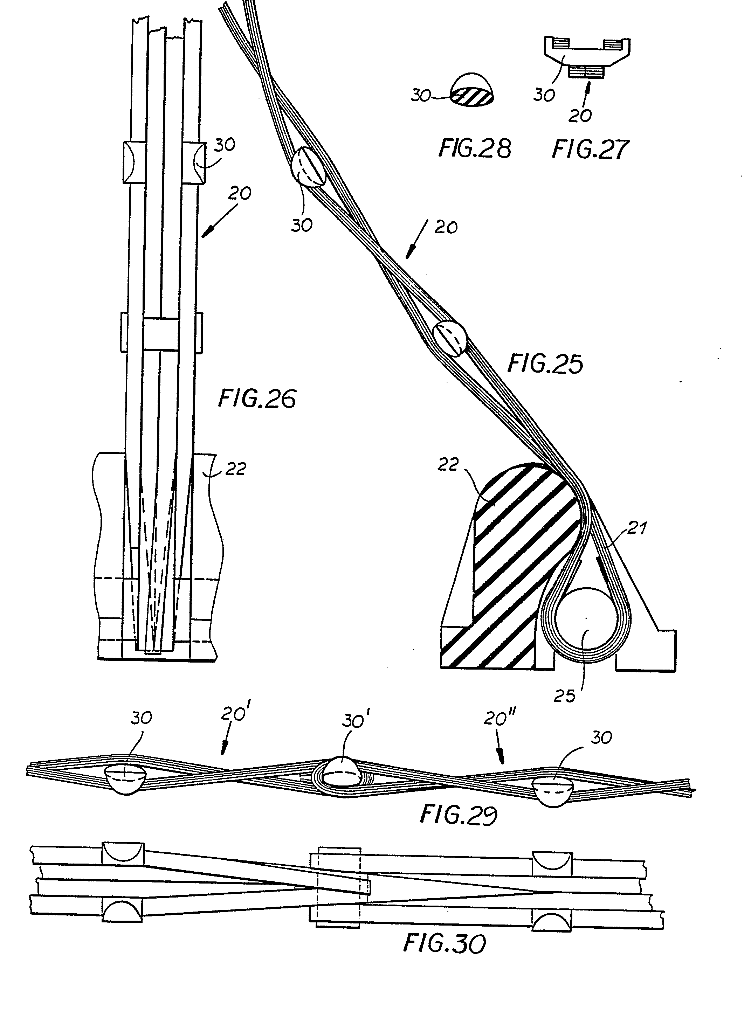

Weitere Merkmale der Erfindung sind nachstehend anhand von in den Zeichnungen dargestellten Ausführungsbeispielen näher beschrieben. Dabei zeigen: Fig. 1 die Ansicht eines Ringes für einen Gurt, Fig. 2a die Draufsicht auf einen aus Ringen nach Fig. 1 bestehenden Halbgurt, Fig. 2b die Draufsicht auf den gesamten Gurt, Fig. 3 die Ansicht eines aus je zwei Ringen bestehenden Elementes für einen Gurt, Fig. 4 die schaubildliche Ansicht auf die Verbindungsstelle der beiden nebeneinander laufenden Ringe, Fig. 5 eine Draufsicht auf einen aus Ringen nach den Fig. 3 und 4 bestehenden Gurt, Fig. 6 in schaubildlicher Darstellung zwei nebeneinander liegende Ringteile, die durch eine Klammer miteinander verbunden sind, wobei in Fig. 7 die Klammer und in Fig. 8 die Platine zur Herstellung der Klammer dargestellt sind, Fig. 9 in vergrößerter Darstellung den Endteil eines Ringes nach Fig. 1, Fig. 10 die hiezu verwendete Klammer, Fig. 11 den Querschnitt eines fertigen Reifens mit der Reifenbreite nach versetzten Radialarmierungen, Fig. 12 einen Querschnitt durch die Seitenwand des Reifens nach Fig. 11, Fig. 13 eine schematische Ansicht eines vorgeformten Radialarmierungelementes, Fig. 14 die Ansicht einer Endschleife des Radialarmierungelementes nach Fig. 13 in Richtung des Pfeiles XIV, Fig. 15 einen Querschnitt und die Fig. 16 und 17 Ansichten eines Verankerungselementes, die Fig. 18, 19 und 20 ebenfalls Querschnitt und Ansichten einer Variante des Verankerungselementes, Fig. 21 einen Querschnitt ähnlich Fig. 11 einer etwas abgewandelten Ausführungsform, Fig. 22 in vergrößertem Maßstab einen Querschnitt einer gegenüber Fig. 18 veränderten Ausführungsform, Fig. 23 und Fig. 24 Ansichten in zwei zueinander senkrechten Richtungen eines Abstandhalters, Fig. 25 und Fig. 26 Ansichten einer Variante eines vorgefertigten Radialelementes, Fig. 27 und Fig. 28 Querschnitt und Ansicht eines Formsplintes, Fig. 29 und Fig. 30 Ansichten einer weiteren Ausführungsform.

Gemäß den Fig. 2a und 2b besteht der Gurt eines Fahrzeugreifens aus einzelnen, nebeneinander verlaufenden Ringen 1, die aus je einem spiralförmig gewickeltem flachen Draht gebildet sind. Die Enden 2 und 3 des flachen Drahtes sind umgebogen und durch eine einfache Klammer 4 gehalten. In Fig. 9 ist der mit der Halteklammer 4 versehene Teil des Ringes 1 vergrößert herausgezeichnet und in Fig. 10 ist die Halteklammer 4 dargestellt.

In den Fig. 1, 2a und 2b sind überdies Abstandhalter eingezeichnet, deren Aufbau und Funktion an Hand der Fig. 11, 23 und 24 beschrieben werden wird.

Die Elemente eines Gurtes nach den Fig. 3 bis 5 bestehen je aus zwei nebeneinander liegenden Ringen 5 und 6. Diese Ringe 5 und 6 sind aus einem einzigen flachen Draht spiralförmig gewickelt, wobei der Beginn 7 des Drahtes im Inneren des Ringes beginnt, an seinem äußeren Umfang mit dem Abschnitt 8 zum Ring 5 verläuft und mit dem Ende 9 im Inneren des Ringes 5 endet. Im Bereich des Abschnittes 8 sind Halteklammern 10 angeordnet.

Anstatt der Halteklammern 10 können auch Halteklammern 11 nach den Fig. 6 bis 8 verwendet werden. Diese Halteklammern .11 weisen einen mittleren Steg 12 auf, von dem nach beiden Seiten Lappen 13, 14 abstehen. Diese Lappen 13, 14 umgreifen die Ringe 5 und 6, sodaß durch eine Halteklammer eine Distanzierung der beiden Ringe 5 und 6 erreicht wird.

Die Herstellung einer derartigen Halteklammer ist .sehr einfach: Es braucht bloß eine Platine 15 mit einem Längsschnitt 16 versehen werden, wobei dann der nicht durchschnittene Teil den Steg 12 bildet und die beiden Lappen 13 und 14 einfach ausgebogen werden können.

Um bei der Herstellung des Reifens die Ringe 1 im Abstand auf den Kern auflegen zu können, sind die Ringe mit Abstandhaltern 9 versehen, die in den Fig.    2a und 2b im Zusammenhang mit den Ringen und in den Fig. 23 und 24 für sich dargestellt sind. Wie ersichtlich, weisen diese Abstandhalter 19 Rillen 19a zum Einlegen der Ringe 1 auf, laufen konisch gegen die Mitte des Reifens zusammen und sind quer zur Reifenachse gerichtet. Dadurch ist es möglich, den einen Haltgurt entsprechend Fig. 2b von der einen Seite her und den anderen Haltgurt von der anderen Seite her auf den Kern aufzuschieben.

In den Korpus 17 des in Fig. 11 dargestellten Reifens ist überdies eine Radialarmierung eingebettet, die aus Ringen ähnlich den vorstehend beschriebenen Gurtringen besteht. Durch entsprechende Verformung werden aus diesen aus mehrschichtig gewickelten flachen Draht bestehenden Ringen einseitig offene Elemente 20 gebildet, an deren Enden Schleifen 21 ausgebildet sind. Wie insbesondere aus Fig. 14 ersichtlich ist, sind die Elemente 20 von den Schleifen 21 aus fächerförmig aufgefaltet.

Zur Verankerung der Elemente 20 sind kammartige Verankerungselemente vorgesehen, wie sie insbesondere in den Fig. 15 bis 20 dargestellt sind.

Ein Verankerungselement 22 nach den Fig. 15 bis 17 besteht aus einem Grundkörper, von dem aus kammartige Vorsprünge 23 abstehen, wobei an der Unterseite eine durchgehende Nut 24 zum Einlegen eines Bolzens 25 angeordnet ist. Dieser ist durch die Schleifen 21 der Elemente 20 durchgesteckt.

0207061

- 5 -

Aus Fig. 11 ist ersichtlich, daß die Verankerungselemente 22 auf einem Verankerungsring 26 aufliegen und von einem mit diesem verschraubten Positionierelement 27 gehalten sind. Der derart ausgebildete Reifen ist im Beispiel auf einer handelsüblichen dreiteiligen Felge 28 aufgezogen. Bei diesem Beispiel sind die Radialarmierungselemente 20 überdies in zwei Gruppen A, B angeordnet, die quer zum Reifenquerschnitt versetzt sind. Aus Fig. 12 ergibt sich, daß die Seitenwände des Reifens entlang des Umfanges den einzelnen Gruppen entsprechend wellenartig geformt sind. In Fig. 11 ist überdies ein zur Abstandhalterung gegenüber dem Kern angeordnetes Netzwerk 29 eingezeichnet.

Das Verankerungselement 22a nach den Fig. 18 und 20 unterscheidet sich vom Verankerungselement 22 im wesentlichen dadurch, daß der Abstand zwischen den kammartigen Vorsprüngen 23 kleiner ist, weil die Radialarmierungselemente 20a im Bereich der Schleifen 21 schmäler sind.

Der Reifen nach Fig. 21 ist einfacher, jedoch grundsätzlich gleich aufgebaut wie der nach Fig. 11. Der wesentliche Unterschied ist, daß nebeneinanderliegende Radialarmierungselemente 20 nicht gegeneinander versetzt sind.

Die Schleifen 21 der Radialarmierungselemente 20 können durch Halteklammern gehalten werden. Es ist nach Fig. 22 jedoch auch möglich, allein die Reibung zum Halten der Schleifen auszunützen. Dadurch, daß das Ende 29 des flachen Drahtes im Bereich der Schleife innen liegt, ist zufolge der Umschlingung um den Bolzen 25 und das Halteelement 22 die Reibung so groß, daß die Schleife 21 sich nicht öffnen kann.

Sowohl die Abstandhalter 19 als auch die Verankerungselemente 22 bestehen aus einem Elastomer, sodaß sie mit dem Material des Reifenkorpus 17 nach dem Aushärten des Reifenmaterials eine innige Verbindung eingehen und damit eine hohe Verbundfestigkeit gegeben ist. Das Reifenmaterial füllt auch die Hohlräume in den Schleifen aus. Die Herstellung eines erfindungsgemäßen Reifens ist einfacher als mit bisher verwendeten Armierungen, weil komplizierte Wickelvorgänge entfallen können, die Montage der Armierung vielmehr auf einfache Weise erfolgen kann.

In den Fig. 25 bis 30 sind noch Varianten der Radialarmierung gezeigt, bei denen die Flachdrähte der Armierung durch zwischengelegte Formstücke in Achterform verlaufen. Wie insbesondere aus den Fig. 27 und 28 zu erkennen ist, die Fig. 28 stellt einen Mittelschnitt durch Fig. 27 ohne aufgelegte Flachdrähte dar, besitzen die Formstücke 30 in jenem Bereich, in dem die Flachdrähte der Armierungselemente 20 aufliegen, einen elliptischen Querschnitt. Die Umlenkung der Flachdrähte ist zufolge dieses Querschnittes derart, daß eine Festigkeitsverminderung zufolge dieser Umlenkung praktisch nicht eintritt.

Nach den Fig. 29 und 30 können die Formstücke 30 auch dazu.verwendet werden, die Radialarmierung aus einzelnen Teilstücken 20', 20" aufzubauen, in dem das Ende jedes Teilstückes um ein Formstück 30' herumgewickelt wird.

Patentansprüche

1. Fahrzeugreifen mit einem Gurt und/oder einer Radialarmierung, dadurch gekennzeichnet, daß die Armierung mindestens teilweise aus Elementen aus mehrschichtig gewickeltem flachen Draht gebildet ist.

2. Fahrzeugreifen nach Anspruch 1, dadurch gekennzeichnet, daß die Enden des gewickelten flachen Drahtes eines Elementes durch Halteklammern am Element gehalten sind.

3. Fahrzeugreifen nach Anspruch 1 oder 2, dadurch gekennzeichnet, daß der Gurt aus mehreren nebeneinander liegenden spiralförmig gewickelten Ringen besteht.

4. Fahrzeugreifen nach einem der Ansprüche 1 bis 3, dadurch gekennzeichnet, daß der Gurt aus mehreren nebeneinander liegenden Elementen besteht, deren jedes zwei nebeneinander verlaufende, aus einem einzigen Draht spiralförmig gewickelte Ringe aufweist, wobei der Draht im Inneren des einen Ringes beginnt, am äußeren Umfang von einem Ring zum anderen verläuft und im Inneren des anderen Ringes endet.

5. Fahrzeugreifen nach einem der Ansprüche 1 bis 4, dadurch gekennzeichnet, daß die Radialarmierung aus einseitig offenen entsprechend geformten Elementen besteht, deren Enden eine Schleife bilden und die von den Schleifen aus fächerartig aufgefaltet sind, wobei zur Verankerung in den Reifenwülsten in den Schleifen Bolzen od.dgl. angeordnet sind.

6. Fahrzeugreifen nach Anspruch 5, dadurch gekennzeichnet, daß im Bereich der Schleifen kammartige Verankerungselemente bzw. Vorsprünge vorgesehen sind.

7. Fahrzeugreifen nach Anspruch 5 oder 6, dadurch gekennzeichnet, daß die Radialarmierung aus zwei untereinander quer zum Reifenquerschnitt versetzten Gruppen von einzelnen Elementen besteht.

8. Fahrzeugreifen nach Anspruch 7, dadurch gekennzeichnet, daß die Seitenwände des Reifens entlang des Umfanges den einzelnen Gruppen entsprechend wellenartig geformt sind.

0207061

9. Fahrzeugreifen nach einem der Ansprüche 1 bis 8, dadurch gekennzeichnet, daß die Flachdrähte des Gurtes und/oder der Radialarmierung durch zwischengelegte Formstücke in Achterform verlaufen.

10. Fahrzeugreifen nach Anspruch 9, dadurch gekennzeichnet, daß die Formstücke im Auflagebereich der Flachdrähte einen elliptischen Querschnitt aufweisen.

11. Fahrzeugreifen nach Anspruch 9 oder 10, dadurch gekennzeichnet, daß die Gurt- und/oder Radialarmierung aus Teilstücken zusammengesetzt ist, indem das Ende jedes Teilstückes um ein Formstück herumgewickelt ist.

Władyslaw Kubica

und

Adam Kubica

durch:

0207061

FIG 2a

FIG.1

FIG.1O

FIG.9

FIG 2b

FIG.8

FIG.7

FIG.6

FIG.23

FIG.24

FIG.22

0207061

FIG.4

FIG.3

FIG.5

0207061

FIG.13

FIG.14

FIG.12

FIG.11

0207061

FIG.17

FIG.20

FIG.16

FIG.15

FIG.19

FIG.18

FIG.21

0207061

FIG.28   FIG.27

FIG.26

FIG.25

FIG.29

FIG.30